# NEUE EUROPÄISCHE PATENTSCHRIFT

(11) **EP 2 112 102 B2**
(45) Veröffentlichungstag und Bekanntmachung des Hinweises auf die Entscheidung über den Einspruch: **30.11.2016**
(45) Hinweis auf die Patenterteilung: 26.05.2010
(21) Anmeldenummer: 08021048.7
(22) Anmeldetag: 04.12.2008
(51) Int. Cl.: B65G 65/48, B65G 53/16, B65G 53/24

(54) **Vorrichtung zum Fördern von Schüttgut mit einem Einfülltrichter**
Device for conveying bulk material with a funnel
Dispositif d'approvisionnement de produits en vrac à l'aide d'un entonnoir

(30) Priorität: 22.04.2008 DE 202008005602 U
(43) Veröffentlichungstag der Anmeldung: 28.10.2009
(73) Patentinhaber: Kulik, Axel, 79346 Endingen (DE)
(72) Erfinder: Kulik, Axel, 79346 Endingen (DE)
(74) Vertreter: Kunst, Manuel Nikolaus Johannes

(56) Entgegenhaltungen:
- DE-A1- 2 806 805
- DE-A1- 4 328 805
- DE-A1- 19 902 022
- DE-A1- 19 904 839
- DE-A1- 19 935 727
- DE-U1- 8 119 228
- DE-U1- 20 008 584
- DE-U1-202007 015 181
- US-A- 4 129 264

## Beschreibung

Die Erfindung betrifft eine Vorrichtung zum Fördern von Schüttgut, rieselfähigem Schüttgut oder von Salz mit einem Einfülltrichter für dieses Gut, mit einer unter dem Einfülltrichter angeordneten Ausgabeöffnung, Dosiereinrichtung oder Zellenradschleuse und mit einer unter der Ausgabeöffnung, Dosiereinrichtung oder Zellenradschleuse verlaufenden Luftdruckförderleitung, in welche die Ausgabeöffnung, Dosiereinrichtung oder Zellenradschleuse mündet und welche von einem einen Förderluftstrom erzeugenden Verdichter oder Gebläse beaufschlagbar oder beaufschlagt ist, wobei der Verdichter oder das Gebläse einen mit ihm verbundenen Antriebsmotor aufweist.

Eine vergleichbare Vorrichtung entsprechend dem Oberbegriff des Anspruchs 1 ist aus DE 20 2007 015 181 U1 bekannt, jedoch ist für den Verdichter oder das Gebläse kein Antriebsmotor vorhanden, sondern der verdichter oder das Gebläse wird über eine Kupplung mit einer Zapfwelle insbesondere eines Fahrzeugs verbunden, wenn die Vorrichtung betrieben werden soll.

Dadurch ist die Vorrichtung von dem Vorhandensein eines Fahrzeugs mit einer Zapfwelle abhängig.

Ein eigenständiger Antriebsmotor hingegen erzeugt zusammen mit dem Verdichter oder Gebläse eine erhebliche Geräuschentwicklung. Eine solche Vorrichtung könnte deshalb in oder nahe bei Wohngebieten praktisch nicht eingesetzt werden, obwohl dies vor allem dann wichtig und zweckmäßig ist, wenn beispielsweise Streusalz oder Streusalzreste aufgenommen werden sollen.

Es besteht deshalb die Aufgabe, eine Vorrichtung der eingangs definierten Art zu schaffen, die auch in Wohngebieten oder in Gebieten eingesetzt werden könnte, in denen zu starke Geräuschentwicklungen unterbleiben sollen.

Zur Lösung dieser Aufgabe sind die Merkmale des Anspruchs 1 vorgesehen.

Durch eine Schalldämmung kann die an sich auftretende Geräuschentwicklung so gedämmt werden, dass sie nicht mehr stört. Der zusätzliche Aufwand einer solchen Schalldämmung ermöglicht also den Einsatz der Vorrichtung auch in Wohngebieten oder solchen Gebieten, in denen große Geräuschentwicklungen unterbleiben müssen wie zum Beispiel im Bereich von Krankenhäusern oder Kuranstalten.

Besonders günstig ist es dabei, wenn als Schalldämmung im Bereich des Gebläses und seines Antriebs eine Schallschutzeinhausung vorgesehen ist. Eine solche Schallschutzeinhausung umschließt also vor allem die Teile der Vorrichtung, von denen die Geräuschentwicklung ausgeht, und führt zu einer effektiven Schalldämmung.

Als Schalldämmung an dem Einfülltrichter kann ein schalldämmender Belag oder können schalldämmende Beläge an der Außen- und/oder Unterseite des Einfülltrichters angeordnet sein, wobei die schalldämmenden Beläge den Trichter insbesondere berühren, was die Effektivität erhöht. Da der Belag oder die Beläge nur an der Außen- oder Unterseite des Einfülltrichters angeordnet sind, bleibt dieser selbst für das Einfüllen des Gutes frei. Sowohl die beim Einfüllen entstehenden Geräusche als auch die von dem Gebläse und seinem Antriebsmotor kommenden Geräusche werden jedoch effektiv gedämpft oder schallgedämmt.

Besonders günstig ist es dabei, wenn die Schalldämmung im Bereich des Gebläses und seines Antriebs aus Segmenten zusammengesetzt ist, die an ihren Berührstellen gegenseitig abgedichtet sind. Somit ist es möglich, die schalldämmenden Segmente aus einem schalldämmenden Werkstoff an die Form der Vorrichtung anzupassen und in geeigneter Weise anzubringen und gegeneinander abzudichten, so dass auch keine Lücken zwischen den einzelnen Segmenten verbleiben.

Eine zweckmäßige Ausführungsform der Erfindung könnte zum Beispiel vorsehen, dass Gebläse und Antrieb in einem Metallgestell angeordnet und gehalten sind, welches mittels Begrenzungswandungen nach außen abgeschlossen ist, und dass die Begrenzungswände mit einem schalldämmenden Belag oder mit den Schallschutzsegmenten versehen oder belegt sind. Somit ergibt sich eine Vorrichtung mit einem Gehäuse, welches einerseits von dem Metallgestell und andererseits von den Begrenzungswandungen gebildet ist und zur Schalldämmung die erwähnte Belegung mit dem schalldämmenden Belag oder den Schallschutzsegmenten aufweist.

Dabei ist es vorteilhaft, wenn die Begrenzungs- oder Abschlusswandungen der Vorrichtung innenseitig mit dem schalldämmenden Belag oder mit den Schallschutzsegmenten oder mit Schallschutzmatten versehen sind, wobei sowohl die Schallschutzsegmente als auch die Schallschutzmatten praktisch den schalldämmenden Belag bilden. Durch die innenseitige Anordnung der Schalldämmung bleibt die Außenseite der Vorrichtung durch die Abschlusswandungen begrenzt, die zum Beispiel aus Blech oder auch aus Kunststofftafeln gebildet sein könnten und das Innere der Vorrichtung und auch der Schalldämmung schützen.

Die an dem Einfülltrichter vorgesehenen Schallschutzelemente können mit diesem durch Verkleben verbunden sein. Dies erleichtert die Montage und führt zu einer guten Verbindung der Schallschutzelemente oder des schalldämmenden Belags mit dem Trichter, was zu einer effektiven Geräuschminderung beiträgt.

Besonders günstig ist es dabei, wenn das oder die Schallschutzelemente für den Einfülltrichter an dessen Außenseite angedrückt, dadurch an seine Form angepasst und insbesondere mittels doppelseitigem Klebematerial oder mittels doppelseitig wirksamer Klebefolie befestigt sind. Die Schallschutzelemente beziehungsweise der schalldämmende Belag für den Einfülltrichter muss also nicht an dessen Form vorformt angepasst sein, sondern kann durch Andrücken in die entsprechende Form gebracht und durch die doppelseitigen Klebematerialien auch gleichzeitig befestigt werden, was die Montage verkürzt und erleichtert.

Zumindest der das Gebläse und dessen Antriebsmotor enthaltende Teil der Vorrichtung kann eine Zwangsbelüftung und dazu gehörende Außenbelüftungsöffnungen aufweisen. Vor allem durch die Schalldämmung ergibt sich gleichzeitig eine große Erwärmung innerhalb der Vorrichtung im Bereich des Gebläses und seines Antriebsmotors, die zu einem Schaden führen könnte, was durch die Zwangsbelüftung vermieden werden kann.

Dabei ist es günstig, wenn an den Belüftungsöffnungen sowohl am Eintritt als auch am Austritt Schallschutzelemente mit Abstand vorgelagert sind, die eine größere Fläche haben, als es dem Öffnungsquerschnitt entspricht, so dass die Ränder der Schallschutzelemente die den Lufteintritt und den Luftaustritt bildenden Öffnungen zumindest seitlich überragen und der Be- und Entlüftungsweg an diesen Schallschutzelementen vorbei in die Öffnungen oder aus den Öffnungen labyrinthartig gestaltet ist. Trotz der Belüftungsmöglichkeit ergibt sich so dennoch eine gute Schalldämmung.

An den Belüftungsöffnungen können jeweils nach außen ab- oder vorstehende Ränder vorgesehen sein, die mit Abstand von gegen die Vorrichtung hin gerichteten Rändern der vorgelagerten Schallschutzelemente übergriffen sind, wobei die jeweiligen Ränder von den übergriffenen Rändern einen Belüftungsabstand einhalten. Dadurch wird der labyrinthartige Weg für die Luft noch etwas stärker umgelenkt, wodurch eventuell austretender Schall entsprechend gut gedämpft wird.

Vor allem bei Kombination einzelner oder mehrerer der vorbeschriebenen Merkmale und Maßnahmen ergibt sich eine Vorrichtung zum Fördern von Schüttgut mit Hilfe von Druckluft, die für den Verdichter oder das Gebläse einen zugehörigen eigenen Antriebsmotor aufweisen kann, also von einem Fahrzeug mit Zapfwelle unabhängig ist und dennoch sogar in Wohngebieten eingesetzt werden kann.

Für die Handhabung der bevorzugt unabhängig einsetzbaren Vorrichtung ist es günstig, wenn an der Unterseite der Vorrichtung eine Hubwagen- oder Gabelstapleraufnahme vorgesehen ist, so dass die Vorrichtung auch sehr einfach verladen und transportiert werden kann.

Dabei kann die Hubwagenaufnahme durch parallele, sich nach der Unterseite öffnende Vertiefungen gebildet und insbesondere durch im Querschnitt abwärts gerichtete Stege seitlich begrenzt oder durch parallele U- oder Holprofile gebildet sein, deren Abstand vorzugsweise dem der Gabelzinken eines Hubwagens oder Gabelstaplers entspricht. Vor allem U- oder Hohlprofile sind günstig, weil sie zur Stabilisierung der Unterseite der Vorrichtung und damit zur Stabilisierung des Metallgestells beitragen können, welches die Aggregate der Vorrichtung trägt und aufnimmt.

Zusätzlich oder stattdessen kann an der Oberseite und/oder an der oder den Seiten der Vorrichtung wenigstens eine Halterung, Öse oder Öffnung, zum Beispiel auch ein pilzartiger Vorsprung, für den Angriff von Seilen und/oder Haken vorgesehen sein, wodurch sich ebenfalls die Möglichkeit ergibt, die Vorrichtung auf einfache Weise zu verladen, um sie an ihren Einsatzort zu bringen und dort wieder abladen zu können.

Nachstehend ist ein Ausführungsbeispiel der Erfindung anhand der Zeichnung näher beschrieben. Es zeigt in zum Teil schematisierter Darstellung:
- Fig. 1: eine schaubildliche Ansicht einer erfindungsgemäßen Vorrichtung etwas schräg von oben mit Blick auch in den Einfülltrichter, der seitlich neben einem Schallgeschützten Gehäuseteil zur Aufnahme des Ver- dichters und seines Antriebsmotors angeordnet ist,
- Fig. 2: eine der Fig. 1 entsprechende Darstellung, bei wel- cher die Schallschutzdämmung der Vorrichtung wegge- lassen ist, so dass man die einzelnen Aggregate der Vorrichtung auf einem sie tragenden Rahmen und Bo- den und den Schallschutzrahmen erkennen kann, an welchem die schalldämmenden Elemente in Gebrauchs- stellung befestigt sind,
- Fig. 3: in schematisierter Darstellung einen Längsschnitt der Vorrichtung, wobei die in Fig. 1 an gegenüber- liegenden Seitenwänden vorgesehenen schallge- schützten Belüftungsöffnungen demgegenüber um 90° versetzt dargestellt sind,
- Fig. 4: eine etwas abgewandelte Ausführungsform der erfin- dungsgemäßen Vorrichtung aus einem anderen Blick- winkel, wobei der Schaltschrank nicht unmittelbar an der Vorrichtung, sondern variabel und separat platziert ist, sowie
- Fig. 5: eine der Fig. 1 entsprechende Darstellung der erfindungsgemäßen Vorrichtung, wobei der Einfüll- trichter durch einen in ihn eingreifenden Zusatz- trichter vergrößert ist.

Eine im Ganzen mit 1 bezeichnete Vorrichtung dient zum Fördern von Schüttgut, zum Beispiel von rieselfähigem Schüttgut wie Salz und weist zur Aufnahme dieses Gutes oder Salzes einen Einfülltrichter 2 auf, von wo aus dann dieses Gut weiterbefördert wird, beispielsweise zu einem Lagerplatz oder Lagerbehälter für dieses Schüttgut, falls es an einem Einsatzort übrig geblieben ist und wieder gelagert werden soll.

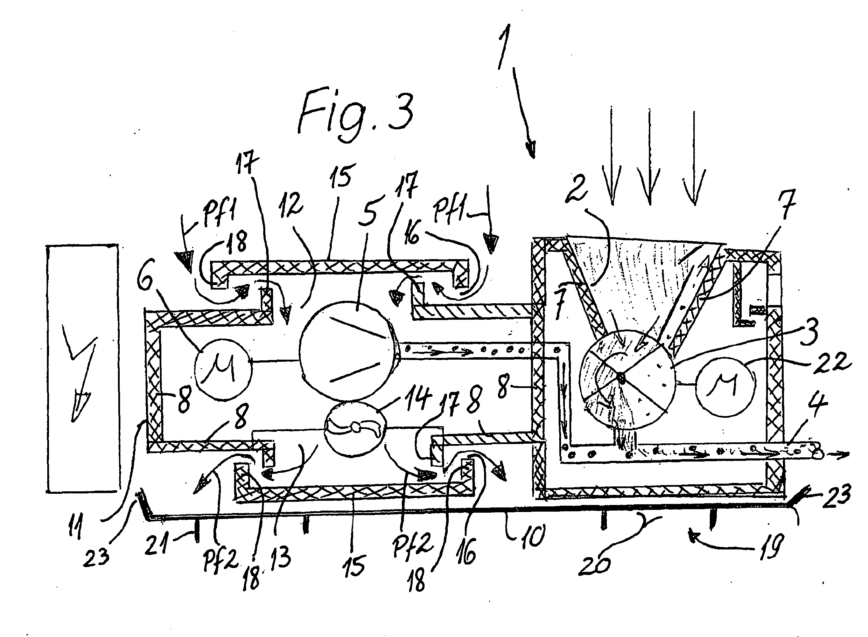

In Fig. 3 erkennt man, dass unter dem Einfülltrichter 2 und dessen gegenüber der Einfüllöffnung verkleinerten Trichteröffnung eine - allgemein als Ausgabeöffnung bezeichnete, im Ausführungsbeispiel als Dosiereinrichtung dienende Zellenradschleuse 3 angeordnet ist, über welche das in den Einfülltrichter 2 eingefüllte Gut zu einer tieferliegenden Luftdruckförderleitung 4 gelangt, in welche nämlich Ausgabeöffnung, Dosiereinrichtung oder Zellenradschleuse 3 mündet.

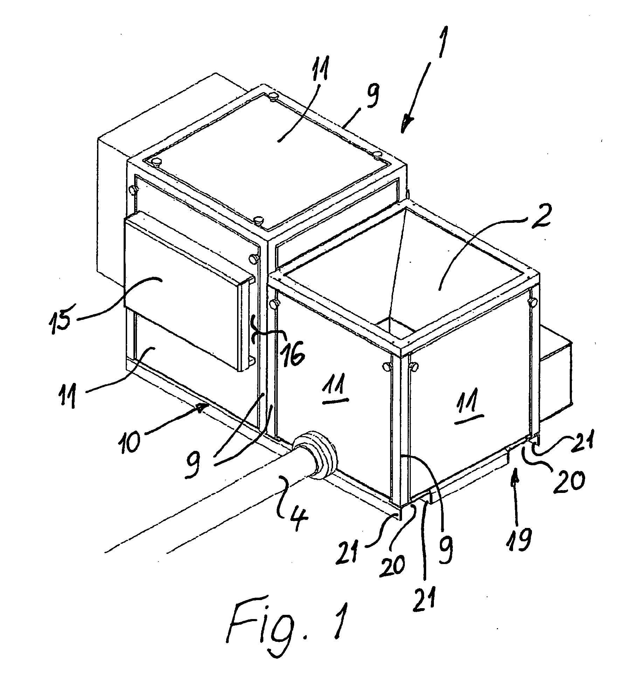

Diese Luftdruckförderleitung 4 wird im Ausführungsbeispiel von einem einen Förderluftstrom erzeugenden Verdichter oder Gebläse 5, im Folgenden auch nur "Gebläse 5" oder nur "Verdichter 5" genannt, beaufschlagt, also mit Förderluft gespeist, wobei der Verdichter oder das Gebläse 5 einen mit ihm unmittelbar verbundenen Antriebsmotor 6 aufweist, wie es in Fig. 3 dargestellt ist. Somit ergibt sich die gut in Fig. 1 erkennbare kompakte Vorrichtung 1, die unabhängig von externen Antriebsmotoren ist, welche über Zapfwellen oder dergleichen mit dem Verdichter oder Gebläse 5 gekuppelt werden müssten.

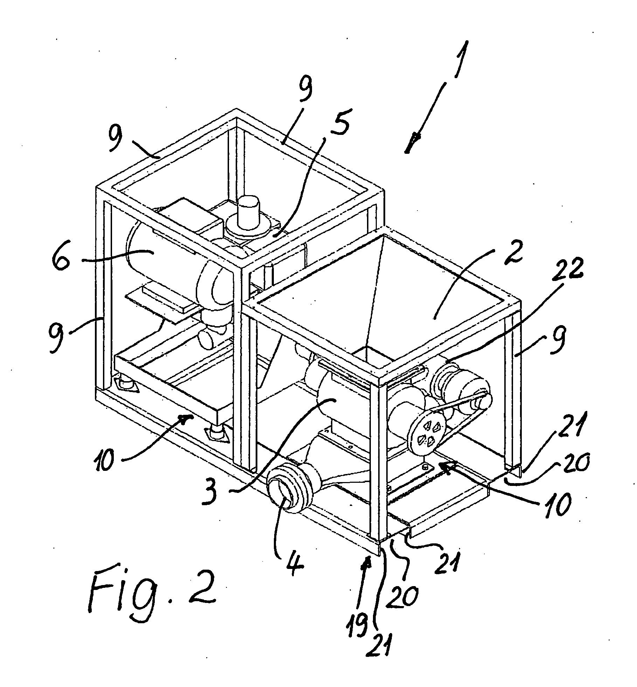

Vor allem bei gemeinsamer Betrachtung der Fig. 1 und 3 und auch der Fig. 2 wird deutlich, dass die Vorrichtung 1 im Bereich des Gebläses oder Verdichters 5 und von dessen Antriebsmotor 6 sowie an dem Einfülltrichter 2 in noch näher zu beschreibender Weise schallgedämmt ist, so dass die Vorrichtung 1 auch beim Betrieb nur wenig störende Geräusche abgibt.

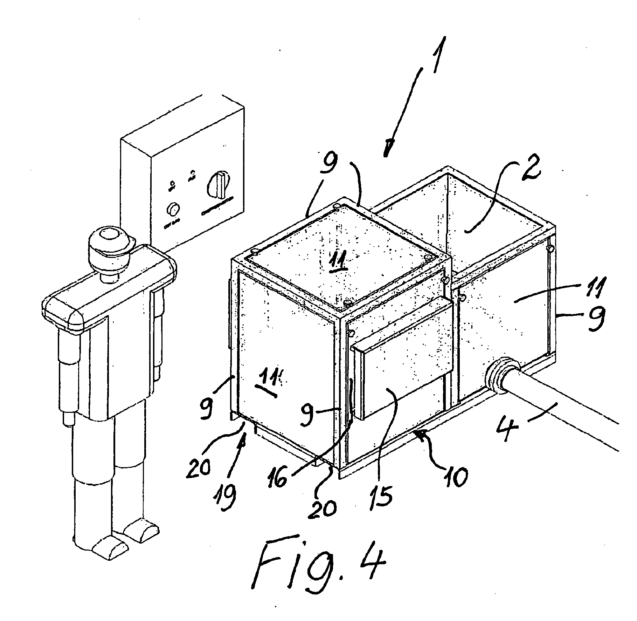

Als Schalldämmung ist dabei im Bereich des Gebläses und seines Antriebes 6 eine in Fig. 1 und 3 bis 5 gut erkennbare Schallschutzeinhausung vorgesehen, die in Fig. 2 noch nicht komplett vorhanden ist.

Vor allem in Fig. 3 erkennt man, dass als Schalldämmung an dem Einfülltrichter 2 ein schalldämmender Belag 7 oder erforderlichenfalls mehrere derartige Beläge 7 an der Außen-und/oder Unterseite des Einfülltrichters 2 angeordnet sind, wobei diese schalldämmenden Beläge 7 den Einfülltrichter 2 unmittelbar berühren. Der Trichter 2 ist dabei in Fig. 3 nur durch eine Linie dargestellt, die der Wandung dieses Trichters 2 entspricht und an der der Einfüllseite abgewandten Außen- oder Unterseite den schalldämmenden Belag 7 aufweist. Somit ist an dieser Stelle einerseits ein aus dem Inneren der Vorrichtung 1 stammendes Geräusch sowie auch ein durch den Einfüllvorgang verursachtes Geräusch gedämpft.

Die Schalldämmung im Bereich des Gebläses 5 und seines Antriebs 6 ist aus Segmenten 8 zusammengesetzt, die an ihren Berührstellen gegenseitig abgedichtet sind, um auch im Bereich der Berührstellen, insbesondere in Eckbereichen, eine Schalldämmung zu bewirken. Auch diese Segmente 8 können von Dichtungsmatten gebildet sein.

Dabei erkennt man vor allem beim Vergleich der Fig. 1 und 2, dass Gebläse 5 und Antrieb 6 in einem Metallgestell aus Streben 9 angeordnet und gehalten sind und auf einer Bodenplatte 10 stehen und befestigt sind, wobei dieses Metallgestell und die Streben 9 mittels Begrenzungswandungen 11, die in Fig. 2 noch fehlen oder weggelassen sind, nach außen abgeschlossen ist. Diese Begrenzungswände 11 sind mit einem schalldämmenden Belag, nämlich mit den Schallschutzelementen 8 oder mit Schallschutzmatten versehen und innenseitig belegt.

In Fig. 1 erkennt man insgesamt deutlich die mit dem Metallgestell oder Metallgerüst verbundenen Begrenzungswandungen 11 sowohl im Bereich des Gebläses 5 als auch des Trichters 2, so dass sich insgesamt eine Schallschutzeinhausung der gesamten Vorrichtung 1 ergibt.

Die an dem Einfülltrichter 2 vorgesehenen Schallschutz-Beläge 7 sind dabei zweckmäßiger Weise durch Verkleben befestigt. Dabei wird in Fig. 3 erkennbar, dass diese Schallschutz-Beläge 7 an der Außenseite des Einfülltrichters 2 angedrückt sind, also an der Seite des Trichters 2, die nicht von dem Einfüllgut oder Schüttgut berührt wird. Durch das Andrücken entsprechender Beläge 7 können diese an die Form des Trichters angepasst und mittels doppelseitigem Klebematerial oder doppelseitig wirksamer Klebefolie befestigt sein.

In den Fig. 1, 3 und 4 ist auch angedeutet, dass der das Gebläse 5 und dessen Antriebsmotor 6 enthaltene Teil der Vorrichtung eine Zwangsbelüftung und dazu gehörende Außenbelüftungsöffnungen 12 und 13 aufweist. An der Belüftungsöffnung 12 kann gemäß den Zeilen Pf 1 in Fig. 3 Luft eintreten, während an der Belüftungsöffnung 13 gemäß den Pfeilen Pf 2 diese Luft wieder austritt, die aber von einem Ventilator oder Lüfter 14 befördert wird. Somit kann die innerhalb des schallgedämmten Innenraums der Vorrichtung 1 auftretende Erwärmung begrenzt oder sogar verhindert werden.

Dabei erkennt man in Fig. 3, dass an den Belüftungsöffnungen 12 und 13 sowohl am Eintritt, als auch am Austritt Schallschutzelemente 15 mit etwas Abstand vorgelagert sind, die eine größere Fläche haben und überdecken, als es dem Querschnitt der Öffnungen 12 und 13 entspricht, so dass die Ränder dieser Schallschutzelemente 15 die Öffnung 12 am Lufteintritt und die Öffnung 13 am Luftaustritt seitlich unter Freilassung von Belüftungsschlitzen 16 überragen, wobei der Be-und Entlüftungsweg labyrinthartig gestaltet ist. Anhand der Fig. 1 wird dabei deutlich, dass die Belüftungsschlitze 16 nur an den Seiten der Schallschutzelemente 15 vorgesehen sind, während der obere und untere Rand dieser Schallschutzelemente 15 mit einer zugehörigen Begrenzungswand 11 verbunden ist, was die Schalldämmung vergrößert. Denkbar wäre aber auch, an der Ober- und der Unterseite der Schallschutzelemente 15 Belüftungsschlitze 16 vorzusehen und die seitlichen Schlitze wegzulassen oder je nach Bedarf an Belüftungsquerschnitt auch an mehr als nur zwei Rändern der Schallschutzelemente 15 solche Belüftungsschlitze 16 vorzusehen.

Für die labyrinthartige Gestaltung der Lüftungswege erkennt man in Fig. 3 an den Belüftungsöffnungen 12 und 13 und den Belüftungsschlitzen 16 nach außen ab- oder vorstehende, im Ausführungsbeispiel stegartig gestaltete Ränder 17, die die Öffnungen 12 und 13 begrenzen und die mit Abstand von gegen die Vorrichtung 1 und die entsprechende Begrenzungswandung 11 hin gerichteten, ebenfalls stegartigen Rändern 18 der vorgelagerten Schallschutzelemente 15 mit Abstand übergriffen sind, wobei die jeweiligen Ränder 18 von den übergriffenen Rändern 17 einen den Belüftungsschlitz 16 bildenden Belüftungsabstand einhalten. Somit kann trotz der Belüftung des Innenraums der Vorrichtung 1 auch im Bereich der dafür erforderlichen Belüftungsöffnungen 12 und 13 eine gute Schalldämmung erreicht werden.

In den Zeichnungen erkennt man außerdem, dass an der Unterseite der Vorrichtung 1 eine Hubwagen- oder Gabelstapleraufnahme 19 vorgesehen ist, die im Ausführungsbeispiel durch parallele sich nach unten öffnende Vertiefungen 20 gebildet und insbesondere durch im Querschnitt abwärts gerichtete Stege 21 seitlich begrenzt oder durch parallele U- oder Hohlprofile gebildet sind, deren Abstand etwa dem der Gabelzinken eines Hubwagens oder Gabelstaplers entspricht. Im Ausführungsbeispiel ist die bevorzugte Lösung mit Hilfe von U-Profilen vorgesehen, welche zu der Aufnahmeplatte 10 für die Aggregate der Vorrichtung 1 gehören und diese mitbilden und verstärken.

Alternativ oder zusätzlich könnte an der Oberseite und/oder an der Seite der Vorrichtung 1 wenigstens eine Halterung, Öse oder Öffnung oder auch ein pilzförmiger Vorsprung für den Angriff von Seilen und/oder Haken von Fördermitteln vorgesehen sein.

In Fig. 1 und 3 erkennt man noch, dass die unter dem Einfülltrichter 2 angeordnete Dosiereinrichtung oder Zellenradschleuse 3 und ihr Antrieb 22 schallgedämmt umgriffen oder ummantelt sind. Der Bereich des Einfülltrichters 2 ist also, was den Trichter selbst betrifft, doppelt schallgedämmt, denn der schallgedämmte Trichter 2 ragt in diese Schalldämmung für die Zellenradschleuse 3 und ihren Antrieb 2 hinein. Die Schalldämmung der Dosiereinrichtung umgreift also auch den Trichter 2 mit dessen Schalldämmung, was die Effektivität verbessert.

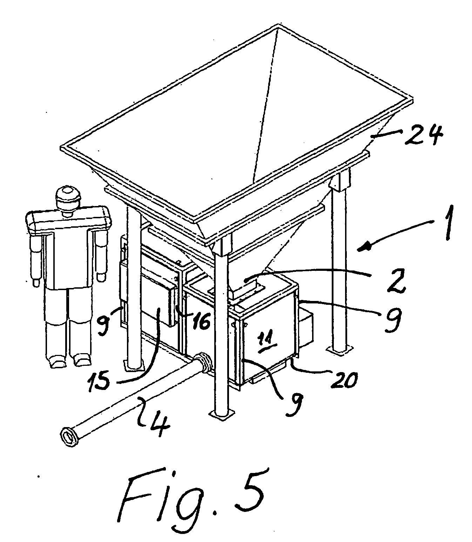

Gemäß Fig. 5 kann in den Einfülltrichter 2 zur Vergrößerung ein Zusatztrichter 24 eingesetzt werden.

Es sei noch erwähnt, dass die untere Aufnahmeplatte 10 durchgängig und mit seitlich aufwärts gerichteten Rändern 23 als Ölwanne ausgestaltet sein kann, um gegebenenfalls von den angetriebenen oder antreibenden Teilen der Vorrichtung 1 ausgehende Lekkagen von dem Untergrund, auf welchem die Vorrichtung 1 jeweils abgesetzt ist, fernzuhalten.

Die Vorrichtung 1 dient zum Fördern oder Rückfördern von Schüttgut wie zum Beispiel von Salz von einem Vorrat zu einer Lagerstelle, beispielsweise einem Lagerbehälter und weist dafür einen Einfülltrichter 2, eine Luftdruckförderleitung 4, in die der Einfülltrichter 2 oder eine zwischen ihm und dieser Leitung 4 angeordnete Dosiereinrichtung oder Zellenradschleuse 3 etwa rechtwinklig mündet auf. Die Luftdruckförderleitung 4 dient zum Weiterbefördern des Schüttgutes, welches von dem Trichter her in diese Leitung 4 gelangt, und kann mit der Leitung 4 dann zu dem Bestimmungsort verbracht werden. Dazu wird die Leitung 4 von einem den Förderluftstrom erzeugenden Verdichter oder Gebläse 5 beaufschlagt und gespeist, wobei für einen unabhängigen Betrieb der Vorrichtung 1 das Gebläse 5 einem mit ihm unmittelbar gekuppelten oder verbundenen Antriebsmotor 6 aufweist. Damit die Vorrichtung 1 auch in Wohngebieten oder Bereichen eingesetzt werden kann, in denen große Geräuschentwicklungen vermieden werden müssen, ist sie im Bereich des Gebläses oder Verdichters 5 und seines Antriebsmotors 6 und an dem Einfülltrichter 2 insbesondere durch eine Schallschutzeinhausung schallgedämmt.

## Patentansprüche

1. Vorrichtung (1) zum Fördern von Schüttgut, rieselfähigem Schüttgut oder von Salz mit einem Einfülltrichter (2) für dieses Gut, mit einer unter dem Einfülltrichter (2) angeordneten Ausgabeöffnung, Dosiereinrichtung oder Zellenradschleuse (3) und mit einer unter der Ausgabeöffnung, Dosiereinrichtung oder Zellenradschleuse (3) verlaufenden Luftdruckförderleitung (4), in welche die Ausgabeöffnung, Dosiereinrichtung oder Zellenradschleuse (3) mündet und welche von einem einen Förderluftstrom erzeugenden Verdichter oder Gebläse (5) beaufschlagbar oder beaufschlagt ist, wobei der Verdichter oder das Gebläse (5) einen mit ihm verbundenen, insbesondere elektrischen Antriebsmotor (6) aufweist, **dadurch gekennzeichnet, dass** die Vorrichtung (1) im Bereich des Gebläses oder Verdichters (5) und seines Antriebsmotors (6) und an dem Einfülltrichter (2) schallgedämmt ist, dass als Schalldämmung an dem Einfülltrichter (2) ein schalldämmender Belag (7) oder schalldämmende Beläge an der Außenund/oder Unterseite des Einfülltrichters (2) angeordnet ist/sind, wobei die schalldämmenden Beläge (7) den Trichter (2) berühren, dass Verdichter oder Gebläse (5) und Antrieb (6) in einem Metallgestell angeordnet und gehalten sind, welches mittels Begrenzungswandungen (11) nach außen abgeschlossen ist, und dass die Begrenzungswandungen (11) mit einem schalldämmenden Belag oder mit Schallschutzsegmenten (8) versehen oder belegt sind, dass die Abschlusswandungen (11) der Vorrichtung (1) innenseitig mit dem schalldämmenden Belag oder mit den Schallschutzsegmenten (8) versehen sind, dass die an dem Einfülltrichter (2) vorgesehenen schalldämmenden Beläge (7) mit diesem durch Verkleben verbunden sind, dass der oder die schalldämmenden Beläge (7) für den Einfülltrichter (2) an dessen Außenseite angedrückt und dadurch an seine Form angepasst und dass die unter dem Einfülltrichter (2) angeordnete Dosiereinrichtung oder Zellenradschleuse (3) und ihr Antrieb (22) schallgedämmt umgriffen oder ummantelt sind und dass die Schalldämmung der Dosiereinrichtung oder Zellenradschleuse (3) auch den Einfülltrichter (2) umgreift.

2. Vorrichtung nach Anspruch 1, **dadurch gekennzeichnet, dass** die Schalldämmung im Bereich des Gebläses (5) und seines Antriebs (6) aus Segmenten (8) zusammengesetzt ist, die an ihren Berührstellen gegenseitig abgedichtet sind.

3. Vorrichtung nach Anspruch 1, **dadurch gekennzeichnet, dass** der oder die schalldämmenden Beläge (7) mittels doppelseitigem Klebematerial oder mittels doppelseitig wirksamer Klebefolie befestigt sind.

4. Vorrichtung nach einem der Ansprüche 1 bis 3, **dadurch gekennzeichnet, dass** zumindest der das Gebläse (5) und dessen Antriebsmotor (6) enthaltende Teil der Vorrichtung eine Zwangsbelüftung und dazu gehörende Außenbelüftungsöffnungen (12, 13) aufweist.

5. Vorrichtung nach Anspruch 4, **dadurch gekennzeichnet, dass** an den Außenbelüftungsöffnungen (12, 13) sowohl am Eintritt, als auch am Austritt Schallschutzelemente (15) mit Abstand vorgelagert sind, die eine größere Fläche haben, als es dem Öffnungsquerschnitt entspricht, so dass die Ränder der Schallschutzelemente (15) den Lufteintritt und den Luftaustritt bildenden Öffnungen zumindest seitlich überragen und der Be- und Entlüftungsweg labyrinthartig gestaltet ist.

6. Vorrichtung nach einem der Ansprüche 4 oder 5, **dadurch gekennzeichnet, dass** an den Außenbelüftungsöffnungen nach außen ab- oder vorstehende Ränder (17) vorgesehen sind, die mit Abstand von gegen die Vorrichtung (1) hin gerichteten Rändern (18) der vorgelagerten Schallschutzelemente (15) übergriffen sind, wobei die jeweiligen Ränder (18) von den übergriffenen Rändern (17) einen Belüftungsabstand einhalten.

7. Vorrichtung nach einem der Ansprüche 1 bis 6, **dadurch gekennzeichnet, dass** an der Unterseite der Vorrichtung (1) wenigstens ein Hubwagen- oder Gabelstapleraufnahme (19) vorgesehen ist.

8. Vorrichtung nach Anspruch 7, **dadurch gekennzeichnet, dass** die Hubwagen- oder Gabelstapleraufnahme (19) durch parallele sich nach der Unterseite öffnende Vertiefungen (20) gebildet und insbesondere durch im Querschnitt abwärts gerichtete Stege (21) seitlich begrenzt oder durch parallele U- oder Hohlprofile gebildet sind, deren Abstand vorzugsweise dem Abstand von Gabelzinken eines Hubwagens oder Gabelstaplers entspricht.

9. Vorrichtung nach einem der Ansprüche 1 bis 8, **dadurch gekennzeichnet, dass** an der Oberseite und/oder an der oder den Seiten der Vorrichtung (1) wenigstens eine Halterung, Öse oder Öffnung für den Angriff von Seilen und/oder Haken oder dergleichen Förderhilfsmitteln vorgesehen ist.

10. Vorrichtung nach einem der vorstehenden Ansprüche, **dadurch gekennzeichnet, dass** die Schalldämmung auch im Bereich der Unterseite der Vorrichtung (1) vorgesehen ist.

## Claims

1. Device (1) for conveying bulk material, free-flowing bulk material or salt, with a filling hopper (2) for this material, with a discharge opening, metering device or cellular wheel sluice (3) arranged below the filling hopper (2), and with an air-pressure conveying line (4) extending below the discharge opening, metering device or cellular wheel sluice (3), into which line the discharge opening, metering device or cellular wheel sluice (3) opens and which can be or is acted upon by a compressor or blower (5) generating a conveying air flow, wherein the compressor or the blower (5) has an, in particular electric, drive motor (6) connected thereto, **characterized in that** the device (1) is sound-damped in the region of the blower or compressor (5) and its drive motor (6) and at the filling hopper (2), **in that**, as the sound damping at the filling hopper (2), a sound-damping covering (7) or sound-damping coverings is/are arranged on the outer side and/or underside of the filling hopper (2), wherein the sound-damping coverings (7) contact the hopper (2), **in that** the compressor or blower (5) and drive (6) are arranged and held in a metal framework which is closed off to the outside by means of boundary walls (11), and **in that** the boundary walls (11) are provided or covered with a sound-damping covering or with soundproofing segments (8), **in that** the boundary walls (11) of the device (1) are provided on the inner side with the sound-damping covering or with the soundproofing segments (8), **in that** the sound-damping coverings (7) provided on the filling hopper (2) are connected thereto by adhesive bonding, **in that** the sound-damping covering or coverings (7) for the filling hopper (2) are pressed onto its outer side and thereby adapted to the shape thereof, and **in that** the metering device or cellular wheel sluice (3) and its drive (22) arranged below the filling hopper (2) are encompassed or encased in a sound-damping manner, and **in that** the sound-damping of the metering device or cellular wheel sluice (3) also encompasses the filling hopper (2).

2. Device according to Claim 1, **characterized in that** the sound-damping in the region of the blower (5) and its drive (6) is composed of segments (8) which are sealed with respect to one another at their contact points.

3. Device according to Claim 1, **characterised in that** the sound-damping covering or coverings (7) are fastened by means of double-sided adhesive material or by means of adhesive film having a double-sided action.

4. Device according to one of Claims 1 to 3, **characterized in that** at least the part of the device containing the blower (5) and its drive motor (6) has a forced ventilation system and outer ventilation openings (12, 13) belonging thereto.

5. Device according to Claim 4, **characterized in that** soundproofing elements (15) are mounted at a distance in front of the outer ventilation openings (12, 13) both at the inlet and at the outlet, which soundproofing elements have a larger area than corresponds to the opening cross section, with the result that the edges of the soundproofing elements (15) protrude at least laterally beyond openings forming the air inlet and the air outlet, and the ventilation and vending path is of labyrinthine configuration.

6. Device according to either of Claims 4 and 5, **characterized in that** outwardly projecting edges (17) are provided at the outer ventilation openings and are encompassed at a distance by edges (18), which are directed towards the device (1), of the soundproofing elements (15) mounted in front of the openings, wherein the respective edges (18) maintain a ventilation spacing from the encompassed edges (17).

7. Device according to one of Claims 1 to 6, **characterized in that** at least one lift truck or forklift receptacle (19) is provided on the underside of the device (1).

8. Device according to Claim 7, **characterized in that** the lift truck or forklift receptacle (19) is formed by parallel depressions (20) opening to the underside and is in particular laterally delimited by cross-sectionally downwardly directed webs (21) or is formed by parallel U-profiles or hollow profiles of which the spacing preferably corresponds to the spacing of fork prongs of a lift truck or forklift.

9. Device according to one of Claims 1 to 8, **characterized in that** at least one holder, eye or opening for the engagement of cables and/or hooks or similar conveying aids is provided on the upper side and/or on the side or the sides of the device (1).

10. Device according to one of the preceding claims, **characterized in that** the sound damping is also provided in the region of the underside of the device (1).

## Revendications

1. Dispositif (1) pour transporter un produit en vrac, un produit en vrac coulant ou du sel avec un entonnoir d'alimentation (2) pour ce produit, comprenant une ouverture de décharge disposée sous l'entonnoir d'alimentation (2), un dispositif de dosage ou une vanne à roue cellulaire (3) et une conduite d'alimentation en air sous pression (4) s'étendant sous l'ouverture de décharge, le dispositif de dosage ou la vanne à roue cellulaire (3), dans laquelle débouche l'ouverture de décharge, le dispositif de dosage ou la vanne à roue cellulaire (3) et qui est sollicitée ou peut être sollicitée par un compresseur ou une soufflante (5) générant un flux d'air de transport, le compresseur ou la soufflante (5) présentant un moteur d'entraînement (6) qui lui est associé, en particulier un moteur d'entraînement électrique, **caractérisé en ce que** le dispositif (1) est insonorisé dans la région de la soufflante ou du compresseur (5) et de son moteur d'entraînement (6) et au niveau de l'entonnoir d'alimentation (2), **en ce qu'**en tant qu'insonorisation, on dispose au niveau de l'entonnoir d'alimentation (2) un revêtement insonorisant (7) ou des revêtements insonorisants au niveau du côté extérieur et/ou du côté inférieur de l'entonnoir d'alimentation (2), les revêtements insonorisants (7) étant en contact avec l'entonnoir (2), **en ce que** le compresseur ou la soufflante (5) et l'entraînement (6) sont disposés et retenus dans une structure métallique qui est fermée vers l'extérieur au moyen de parois de limitation (11) et **en ce que** les parois de limitation (11) sont pourvues ou revêtues d'un revêtement insonorisant ou de segments de protection acoustique (8), **en ce que** les parois de terminaison (11) du dispositif (1) sont pourvues du côté intérieur du revêtement insonorisant ou des segments de protection acoustique (8), **en ce que** les revêtements insonorisants (7) prévus au niveau de l'entonnoir d'alimentation (2) sont connectés à celui-ci par collage, **en ce que** le ou les revêtements insonorisants (7) pour l'entonnoir d'alimentation (2) sont pressés contre son côté extérieur et sont de ce fait adaptés à sa forme et **en ce que** le dispositif de dosage ou la vanne à roue cellulaire (3) disposé(e) sous l'entonnoir d'alimentation (2) et son entraînement (22) sont garnis sur leur pourtour, ou enveloppés de manière insonorisante et **en ce que** l'insonorisation du dispositif de dosage ou de la vanne à roue cellulaire (3) s'applique également autour de l'entonnoir d'alimentation (2).

2. Dispositif selon la revendication 1, **caractérisé en ce que** l'insonorisation dans la région de la soufflante (5) et de son entraînement (6) est constituée de segments (8) qui sont étanchéifiés les uns par rapport aux autres au niveau de leurs zones de contact.

3. Dispositif selon la revendication 1, **caractérisé en ce que** le ou les revêtements insonorisants (7) sont fixés au moyen d'un matériau adhésif double face ou au moyen d'un film adhésif agissant des deux côtés.

4. Dispositif selon l'une quelconque des revendications 1 à 3, **caractérisé en ce qu'**au moins la partie du dispositif contentant la soufflante (5) et son moteur d'entraînement (6) présente une ventilation forcée et des ouvertures de ventilation extérieure associées (12, 13).

5. Dispositif selon la revendication 4, **caractérisé en ce qu'**au niveau des ouvertures de ventilation extérieure (12, 13) à la fois au niveau de l'entrée et également au niveau de la sortie sont placés en amont et à distance des éléments de protection acoustique (15), lesquels présentent une plus grande surface que celle correspondant à la section transversale d'ouverture de telle sorte que les bords des éléments de protection acoustique (15) dépassent au moins latéralement des ouvertures formant l'entrée d'air et la sortie d'air et que la trajectoire de ventilation et de désaérage soit configurée en forme de labyrinthe.

6. Dispositif selon l'une quelconque des revendications 4 ou 5, **caractérisé en ce qu'**au niveau des ouvertures de ventilation extérieure sont prévus des bords (17) saillant ou exposés vers l'extérieur, lesquels sont saisis par le dessus à distance de bords (18) des éléments de protection acoustique placés avant (15) orientés vers le dispositif (1), les bords respectifs (18) conservant une distance de ventilation par rapport aux bords saisis par le dessus (17).

7. Dispositif selon l'une quelconque des revendications 1 à 6, **caractérisé en ce qu'**au niveau du côté inférieur du dispositif (1) est prévu au moins un logement pour un chariot de manutention ou un chariot élévateur à fourche (19).

8. Dispositif selon la revendication 7, **caractérisé en ce que** le logement pour un chariot de manutention ou une chariot élévateur à fourche (19) est formé par des renfoncements (20) parallèles s'ouvrant vers le côté inférieur, et notamment est limité latéralement par des nervures (21) orientées vers le bas en section transversale ou est formé par des profilés parallèles en U ou creux, dont l'espacement correspond de préférence à l'espacement des dents de fourche d'un chariot de manutention ou d'un chariot élévateur à fourche.

9. Dispositif selon l'une quelconque des revendications 1 à 8, **caractérisé en ce qu'**au niveau du côté supérieur et/ou au niveau du ou des côtés du dispositif (1) est prévu au moins une fixation, un oeillet ou une ouverture pour saisir des câbles et/ou des crochets ou des moyens de transport auxiliaires similaires.

10. Dispositif selon l'une quelconque des revendications précédentes, **caractérisé en ce que** l'insonorisation est également prévue dans la région du côté inférieur du dispositif (1).
